# EUROPÄISCHE PATENTANMELDUNG

(11) **EP 1 010 564 A2**
(43) Veröffentlichungstag der Anmeldung: **21.06.2000**
(21) Anmeldenummer: 99125077.0
(22) Anmeldetag: 16.12.1999
(51) Int. Cl.: B60K 15/04

(54) **Einrichtung zur Überwachung der Schliessstellung eines Verschlusses für einen Kraftstofftank**

(30) Priorität: 17.12.1998 DE 19858261
(71) Anmelder: BLAU Kunststofftechnik Zweigniederlassung der Tesma Europa GmbH, 41516 Grevenbroich (DE)
(72) Erfinder: Scharrer, Konrad, 40721 Hilden (DE)
(74) Vertreter: Paul, Dieter-Alfred, Dipl.-Ing.

(57) **Zusammenfassung**

Die Erfindung betrifft eine Einrichtung zur Überwachung der Schließstellung eines auf den Einfüllstutzen (1) eines Kraftstofftanks aufgesetzten Verschlusses (5), der in die Schließstellung bewegbar ist, wobei am Einfüllstutzen (1) ein magnetfeldsensitiver Schalter (15) angeordnet ist, der in Schließstellung des Verschlusses (5) durch das Magnetfeld eines Permanentmagneten (14) geschaltet wird und mit einer Auswerteeinrichtung verbunden ist, welche dadurch gekennzeichnet ist, daß der Permanentmagnet (14) am Einfüllstutzen (1) nahe dem Schalter (15) angeordnet ist und daß der Verschluß (5) wenigstens ein ferromagnetisches Metallelement (17) aufweist, wobei die Anordnung des Metallelements (17) am Verschluß (5) und des Permanentmagneten (14) in bezug auf das Metallelement (17) und den Schalter (15) so getroffen ist, daß das Magnetfeld durch das jeweilige Metallelement (17) in Schließstellung derart beeinflußt wird, daß sich der Schaltzustand des Schalters (15) ändert.

## Beschreibung

Die Erfindung betrifft eine Einrichtung zur Überwachung der Schließstellung eines auf den Einfüllstutzen eines Kraftstofftanks aufgesetzten Verschlusses, der in die Schließstellung bewegbar ist, wobei am Einfüllstutzen ein magnetfeldsensitiver Schalter angeordnet ist, der in Schließstellung des Verschlusses durch das Magnetfeld eines Permanentmagneten geschaltet wird und mit einer Auswerteeinrichtung verbunden ist.

Nach der neuen EURO III-Vorschrift ist festgelegt, daß der Kraftstofftank in der Anfahrphase eines Fahrzeuges auf Dichtigkeit überprüft wird, beispielsweise mittels einer Druckmessung. Stellt sich heraus, daß der Kraftstofftank undicht ist, wird dies am Armaturenbrett angezeigt. Geschieht dies bei drei Anfahrvorgängen hintereinander, bleibt die Anzeige dauernd an und kann nur durch eine Fachwerkstatt zurückgesetzt werden.

Ein solches System spricht selbstverständlich auch dann an, wenn der Fahrer des Fahrzeuges vergißt, den Verschluß auf den Einfüllstutzen aufzusetzen, oder wenn er den Verschluß nicht vollständig bis in die Schließstellung verdreht. Kommt es dabei zu einer Daueranzeige, muß der Kunde eine Fachwerkstatt aufsuchen und dann hinnehmen, daß er über die Handhabung des Verschlusses belehrt wird. Dies ist für die betreffende Person unangenehm und zudem mit Zeitverlust verbunden.

Um dies zu vermeiden, ist es im Stand der Technik bekannt, im Bereich des Einfüllstutzens eine Überwachungseinrichtung vorzusehen, mit der festgestellt werden kann, ob der Verschluß aufgesetzt und bis in die Schließstellung befördert worden ist. Nach der DE 44 04 014 A1 besteht diese Überwachungseinrichtung aus einem Permanentmagneten und einem Reed-Schalter sowie einer mit dem Reed-Schalter verbundenen Auswerteinheit mit Anzeigeeinrichtung. Der Permanentmagnet ist an dem Verschluß angeordnet, während der Reed-Schalter am Einfüllstutzen sitzt. Die Anordnung beider ist so getroffen, daß der Permanentmagnet in der Schließstellung gegenüber dem Reed-Schalter zu liegen kommt. Sein Magnetfeld schließt dann den Reed-Schalter, was zu einer entsprechenden Reaktion in der Auswerteeinrichtung führt. Wird der Verschluß nicht vollständig geschlossen und kann deshalb das Magnetfeld des Permanentmagneten nicht auf den Reed-Schalter einwirken, kommt es zu einer Anzeige, die dem Fahrer signalisiert, daß er den Verschluß nochmals betätigen muß. Auf diese Weise wird vermieden, daß die Dichtheitsüberprüfung beim Anfahrvorgang anspricht.

Die Anordnung des Permanentmagneten am Verschluß ist nicht günstig. Das Material von Permanentmagneten ist wegen seiner Sprödigkeit relativ empfindlich und ist deshalb bei Stoßbelastungen des Verschlusses, beispielsweise wenn er zu Boden fällt, gefährdet. Dies gilt auch dann, wenn - wie in der DE 44 04 014 A1 vorgeschlagen - eine Kunststoffabdeckung vorgesehen wird. Diese hat zudem den Nachteil, daß hierdurch der Abstand zwischen Reed-Schalter und Permanentmagnet relativ groß ist und deshalb ein starker Permanentmagnet vorgesehen sein muß.

Hinzu kommt, daß dann, wenn der Verschluß in unterschiedlichen Anfangsstellungen aufgeschraubt werden kann, wie dies beispielsweise bei Bayonett-Verschlüssen der Fall ist, daß mehrere Permanentmagnete vorgesehen werden müssen, damit in der jeweiligen Schließstellung immer ein Permanentmagnet gegenüber dem Reed-Schalter zu liegen kommt. Dies ist kostenaufwendig.

Der Erfindung liegt somit die Aufgabe zugrunde, eine Überwachungseinrichtung der eingangs genannten Art so zu gestalten, daß Beschädigungen des Permanentmagneten unwahrscheinlich sind und daß auch dann nur ein einziger Permanentmagnet notwendig ist, wenn der Verschluß in unterschiedlichen Anfangsstellungen eingeschraubt werden kann.

Diese Aufgabe wird erfindungsgemäß dadurch gelöst, daß der Permanentmagnet am Einfüllstutzen nahe dem Schalter angeordnet ist und daß der Verschluß wenigstens ein ferromagnetisches Metallelement aufweist, wobei die Anordnung des Metallelements bzw. der Metallelemente am Verschluß und die Anordnung des Permanentmagnetes in bezug auf das Metallelement und den Schalter so getroffen ist, daß das Magnetfeld durch das jeweilige Metallelement in Schließstellung derart beeinflußt wird, daß sich der Schaltzustand des Schalters ändert. Grundgedanke der Erfindung ist es somit, Permanentmagnete und Schalter benachbart am Einfüllstutzen anzuordnen. Befindet sich der Verschluß nicht in Schließstellung, wirkt das Magnetfeld des Permanentmagneten auf den Schalter und bewirkt dort einen bestimmten Schaltzustand, bei einem Reed-Schalter den geschlossenen Zustand. Kommt das Metallelement bei Erreichen der Schließstellung des Verschlusses in die Nähe des Permanentmagneten, wird dessen Magnetfeld so beeinflußt, d. h. bedämpft, daß es nicht mehr ausreicht, den Schaltzustand im Schalter zu halten. Der Schalter nimmt einen anderen Schaltzustand ein, was von der Auswerteeinrichtung registriert und ensprechend angezeigt werden kann, sei es, daß eine Anzeige, die zuvor die nicht ordnungsgemäße Stellung des Verschlusses angezeigt hat, erlischt, sei es, daß eine Anzeige den Schließzustand für eine gewisse Zeit anzeigt und damit die ordnungsgemäße Stellung des Verschlusses bestätigt.

Die erfindungsgemäße Lösung hat den Vorzug, daß der Permanentmagnet am unbeweglichen Teil des Kraftstofftankes angeordnet und demgemäß keinen Stoßbelastungen unterliegt, also gegen Beschädigung geschützt ist. Es können deshalb auch kleine, kostengünstige Permanentmagnete verwendet werden.

In Ausbildung der Erfindung ist vorgesehen, daß über den Umfang des Verschlusses verteilt mehrere Metallelemente vorgesehen sind. Eine solche Anordnung ist zweckmäßig, wenn der Verschluß in unterschiedlichen Anfangsstellungen aufgeschraubt werden kann. Die Anordnung der Metallelemente ist dann so getroffen, daß in Schließstellung immer einer der Metallelemente in dem Bereich des Permanentmagneten zu liegen kommt. Es versteht sich, daß die Anordnung mehrere Metallelemente kostengünstiger ist, als wenn hierfür mehrere Permanentmagnete notwendig wären.

In an sich bekannter Weise sollte der magnetfeldsensitive Schalter als Reed-Schalter ausgebildet sein, wobei dieser Reed-Schalter als einfache Schließe oder auch als Wechselschalter gestaltet sein kann.

Die Zuordnung von Permanentmagnet und Schalter unterliegt keinen besonderen Beschränkungen. Als zweckmäßig hat es sich hier erwiesen, Permanentmagnet und Schalter in Achsenrichtung des Einfüllstutzens übereinander anzuordnen. Zum Schutz beider sollten Permanentmagnet und Schalter in Vertiefungen in der Außenwandung des Einfüllstutzens angeordnet sein und dort beispielsweise eingeklipst, eingegossen oder auch verschraubt sein.

Auch die Formgebung des Metallelementes kann verschiedenartig sein. Zweckmäßig ist jedoch eine dünne Metallplatte, die für eine ausreichende Dämpfung des Permanentmagnetes sorgt, wenn sich der Verschluß in Schließstellung befindet.

Nach einem weiteren Merkmal der Erfindung ist vorgesehen, daß die Auswerteeinrichtung derart mit der Bordelektronik eines den Kraftstofftank aufweisenden Fahrzeugs verbunden ist, daß das Fahrzeug erst fahrbereit geschaltet wird, wenn die Schließstellung des Verschlusses von der Auswerteeinrichtung erfaßt wird. Diese zusätzliche Sicherungsmaßnahme zwingt den Fahrer des Fahrzeuges, den nicht ordnungsgemäß aufgesetzten Verschluß in Schließstellung zu bringen, da er ansonsten nicht weiterfahren kann. Sie garantiert zudem, daß die beim Anfahren des Fahrzeuges vorgesehene Dichtheitsprüfung immer bei einem in Schließstellung befindlichen Verschluß vorgenommen wird, so daß eine Anzeige, die einen undichten Kraftstofftank signalisiert, nicht darauf beruhen kann, daß der Verschluß nicht ordnungsgemäß befestigt worden ist.

In der Zeichnung ist die Erfindung anhand eines Ausführungsbeispiels näher veranschaulicht. Es zeigen:
- Fig. 1: einen Längsschnitt durch einen Einfüllstutzen mit aufgesetztem Verschluß und
- Fig. 2: eine Detailvergrößerung eines Ausschnittes aus Fig. 1.

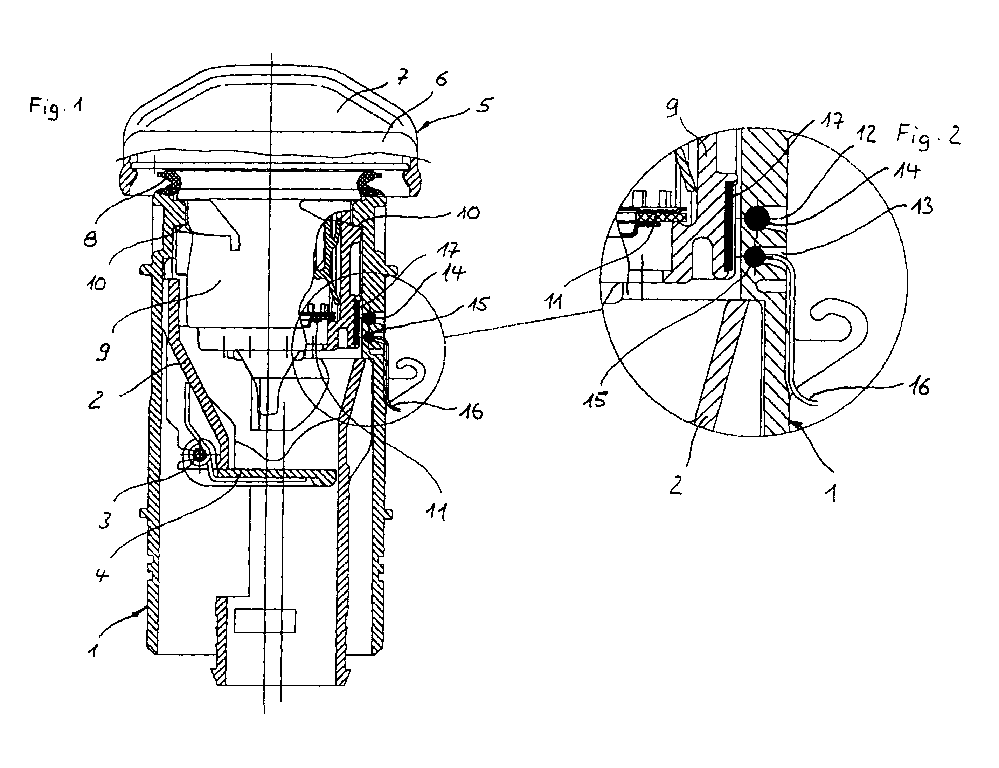

Fig. 1 zeigt einen zylindrischen Einfüllstutzen 1 für einen hier nicht näher dargestellten Kraftfahrzeugtank. Der Einfüllstutzen hat einen Einsatz 2, der normalerweise durch eine mit einer Feder 3 belasteten Klappe 4 geschlossen ist. Diese Klappe 4 wird aufgestoßen, wenn das Zapfventil von einer Tanksäule in den Einfüllstutzen 1 eingesteckt wird.

Das obere Ende des Einfüllstutzens 1 ist durch einen Verschluß 5 geschlossen. Der Verschluß 5 hat ein außenliegendes Deckelteil 6 mit einem Handhabungssteg 7, über den er verdreht werden kann. An der Unterseite des Deckelteils 6 befindet sich ein Dichtring 8, der an der Stirnseite des Einfüllstutzens 1 abdichtend anliegt.

Der Verschluß 5 ragt mit einem Innenteil 9 in den Einfüllstutzen 1 und den Einsatz 2 hinein. Innenteil 9 und Einfüllstutzen 1 bilden einen Bayonett-Verschluß 10 aus, über den der Verschluß 5 in die abdichtende Schließstellung gebracht werden kann. Innerhalb des Innenteils 9 ist eine Ventilanordnung 11 vorgesehen, die bei Unter- oder Überdruck im Kraftstofftank öffnet und in an sich bekannter Weise ausgebildet ist. Da sie zum Verständnis der vorliegenden Erfindung nichts beiträgt, wird auf die Beschreibung der Ventilanordnung 11 verzichtet.

Wie sich insbesondere aus der Detailvergrößerung gemäß Fig. 2 ersehen läßt, weist der Einfüllstutzen 1 außenseitig zwei Ausnehmungen 12, 13 auf, die nahe bis an die Innenseite des Einfüllstutzens 1 gehen. In die obere Ausnehmung 12 ist ein Permanentmagnet 14 eingeklipt. In die untere Ausnehmung 13 ist ein Reed-Schalter 15 ebenfalls eingeklipt. Von dem Reed-Schalter 15 geht ein Kabelpaar 16 zu einer hier nicht dargestellten Auswerteeinrichtung.

An dem Verschluß 5, d. h. an dessen Innenteil 9 ist außenseitig eine Metallplatte 17 befestigt. Auch sie kann in eine entsprechende Ausnehmung eingeklipt sein. Sie erstreckt sich in einer Ebene parallel zur Achse des Einfüllstutzens 1. In der gezeigten Schließstellung des Verschlusses 5 befindet sie sich gegenüber dem Permanentmagneten 14 und dem Reed-Schalter 15. In dieser Stellung sorgt die Metallplatte 17 - sie besteht aus einem ferromagnetischen Material - für eine Dämpfung des Magnetfeldes des Permanentmagneten 14. Dies führt dazu, daß die Einwirkung des Magnetfeldes auf den Reed-Schalter 15 derart herabgesetzt wird, daß er sich öffnet, der Stromkreis über den Reed-Schalter 15 also unterbrochen wird.

Wird der Verschluß 5 geöffnet und dabei verdreht, bewegt sich die Metallplatte 17 aus dem Bereich des Magnetfeldes des Permanentmagneten 14 heraus. Das Magnetfeld ist dann nicht mehr gedämpft und wirkt deshalb voll auf den Reed-Schalter 15. Hierdurch wird er geschlossen, d. h. der Stromkreis über den Reed-Schalter 15 ist nicht mehr unterbrochen.

Die beiden vorbeschriebenen Zustände des Reed-Schalters 15 werden in der Auswerteeinrichtung verarbeitet. Je nach Ausbildung bzw. Programmierung der Auswerteeinrichtung kann eine Anzeige am Armaturenbrett aufleuchten, wenn die Schließstellung des Verschlusses 5 erreicht ist und sich die Metallplatte 17 gegenüber dem Permanentmagnet 14 befindet. Umgekehrt kann aber auch vorgesehen sein, daß eine Anzeige so lange aufleuchtet, so lange sich der Verschluß nicht in der Schließstellung und damit die Metallplatte 17 nicht gegenüber dem Permanentmagneten 14 befinden. Sie erlischt dann bei Erreichen der Schließstellung. Es versteht sich, daß anstatt oder in Kombination mit einer optischen Anzeige auch eine akustische Signalgabe in entsprechender Weise vorgesehen sein kann.

Die Auswerteeinrichtung kann auch mit der Bordelektronik des Fahrzeuges verbunden werden, und zwar in der Weise, daß ein Anfahren des Fahrzeuges dann nicht möglich ist, wenn sich der Verschluß 5 noch nicht in der Schließstellung befindet. Dies sichert, daß die ansonsten vorgesehene Dichtheitsprüfung erst vorgenommen wird, wenn der Verschluß 5 ordnungsgemäß aufgesetzt ist und demgemäß das Fahrzeug in Bewegung gesetzt werden kann.

## Patentansprüche

1. Einrichtung zur Überwachung der Schließstellung eines auf den Einfüllstutzen (1) eines Kraftstofftanks aufgesetzten Verschlusses (5), der in die Schließstellung bewegbar ist, wobei am Einfüllstutzen (1) ein magnetfeldsensitiver Schalter (15) angeordnet ist, der in Schließstellung des Verschlusses (5) durch das Magnetfeld eines Permanentmagneten (14) geschaltet wird und mit einer Auswerteeinrichtung verbunden ist, **dadurch gekennzeichnet**, daß der Permanentmagnet (14) am Einfüllstutzen (1) nahe dem Schalter (15) angeordnet ist und daß der Verschluß (5) wenigstens ein ferromagnetisches Metallelement (17) aufweist, wobei die Anordnung des Metallelements (17) am Verschluß (5) und des Permanentmagneten (14) in bezug auf das Metallelement (17) und den Schalter (15) so getroffen ist, daß das Magnetfeld durch das jeweilige Metallelement (17) in Schließstellung derart beeinflußt wird, daß sich der Schaltzustand des Schalters (15) ändert.

2. Einrichtung nach Anspruch 1, **dadurch gekennzeichnet**, daß über den Umfang des Verschlusses (5) verteilt mehrere Metallelemente (17) vorgesehen sind.

3. Einrichtung nach Anspruch 1 oder 2, **dadurch gekennzeichnet**, daß der magnetfeldsensitive Schalter als Reed-Schalter (15) ausgebildet ist.

4. Einrichtung nach einem der Ansprüche 1 bis 3, **dadurch gekennzeichnet**, daß Permanentmagnet (14) und Schalter (15) in Achsenrichtung des Einfüllstutzens (1) übereinander angeordnet sind.

5. Einrichtung nach einem der Ansprüche 1 bis 4, **dadurch gekennzeichnet**, daß Permanentmagnet (14) und Schalter (15) in Vertiefungen (12, 13) in der Außenwandung des Einfüllstutzens (1) angeordnet sind.

6. Einrichtung nach einem der Ansprüche 1 bis 5, **dadurch gekennzeichnet**, daß das Metallelement als Metallplatte (17) ausgebildet ist.

7. Einrichtung nach einem der Ansprüche 1 bis 6, **dadurch gekennzeichnet**, daß die Auswerteeinrichtung derart mit der Bordelektronik eines den Kraftstofftank aufweisenden Fahrzeugs verbunden ist, daß das Fahrzeug erst fahrbereit geschaltet wird, wenn die Schließstellung des Verschlusses (5) von der Auswerteeinrichtung erfaßt wird.
